# EUROPÄISCHE PATENTSCHRIFT

(11) **EP 0 396 528 B1**
(45) Veröffentlichungstag und Bekanntmachung des Hinweises auf die Patenterteilung: **24.11.1993**
(21) Anmeldenummer: 90890128.3
(22) Anmeldetag: 26.04.1990
(51) Int. Cl.: B05D 1/10, B05D 7/14, B05D 7/24, C23C 4/04, C08G 73/10

(54) **Verfahren zum Beschichten von Oberflächen**
Method of coating surfaces
Procédé d'enduction de surfaces

(30) Priorität: 03.05.1989 AT 1055/89
(43) Veröffentlichungstag der Anmeldung: 07.11.1990
(73) Patentinhaber: Lenzing Aktiengesellschaft, A-4860 Lenzing (AT)
(72) Erfinder: Bieringer, Heimo, Dr., A-4861 Schörfling (AT); Schobesberger, Manfred, A-4863 Seewalchen (AT); Weinrotter, Klaus, Dipl.-Ing., Dr., A-4840 Vöcklabruck (AT)
(74) Vertreter: Schwarz, Albin, Dr. Kopecky & Schwarz Patentanwälte

(56) Entgegenhaltungen:
- EP-A- 0 052 186
- DE-A- 2 143 080
- FR-A- 2 081 659
- US-A- 3 238 181
- US-A- 3 676 638
- US-A- 3 723 165

## Beschreibung

Die Erfindung betrifft ein Verfahren zum Beschichten von Oberflächen durch Flammspritzen eines pulverförmigen Gemisches aus einem hochtemperaturbeständigen Kunststoff und einem Metall.

Ein derartiges Verfahren ist aus der US-A-3,723,165 bekannt, wobei als hochtemperaturbeständiger Kunststoff u.a. auch ein Polyimid und als Metall u.a. Aluminiumlegierungen, Nickel, Kupfer und Bronze genannt werden. Durch Flammspritzen eines pulverförmigen Gemisches aus den genannten Komponenten können harte, korrosionsbeständige Beschichtungen an verschiedenste Oberflächen aufgebracht werden.

Mit diesem Verfahren können allerdings nur dann Beschichtungen zufriedenstellender Güte aufgebracht werden, wenn das verwendete Kunststoffpulver eine relativ enge Korngrößenverteilung aufweist. Weiters ist von Nachteil, daß nur solche Polyimide verarbeitet werden können, deren Glasumwandlungspunkt unter 250°C liegt.

Durch diese Beschränkung läßt die Temperaturbeständigkeit der heute herstellbaren Polyimid-Beschichtungen für bestimmte Anwendungen oft zu wünschen übrig.

Die Erfindung bezweckt die Vermeidung dieser Nachteile und setzt sich insbesondere zum Ziel, ein Verfahren der eingangs beschriebenen Art bereitzustellen, das die Herstellung schwer entflammbarer und besonders temperaturbeständiger Beschichtungen erlaubt.

Dieses Ziel wird erfindungsgemäß dadurch erreicht, daß als hochtemperaturbeständiger Kunststoff ein Polyimid mit einem Glasumwandlungspunkt von über 250°C, welches niedermolekulare, emittierbare Bestandteile in einer Menge von mindestens 1,0 Gew.%, vorzugsweise zwischen 1,0 und 10 Gew.%, enthält, eingesetzt wird.

Es hat sich gezeigt, daß nur dann eine erfolgreiche Verarbeitung möglich ist, wenn diese Untergrenze von 1,0 % an emittierbaren Bestandteilen nicht unterschritten wird, wobei darunter jene Stoffe zu verstehen sind, die im Temperaturbereich zwischen 150 und 350°C dem Polyimid entweichen.

Mit dem erfindungsgemäßen Verfahren können besonders gut Polyimide mit Struktureinheiten der allgemeinen Formel 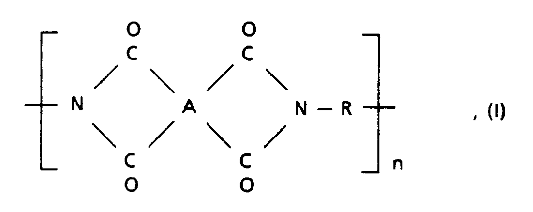
verarbeitet werden, worin n eine ganze Zahl größer als 1 bedeutet und A für eine vierbindige aromatische Gruppe ausgewählt aus 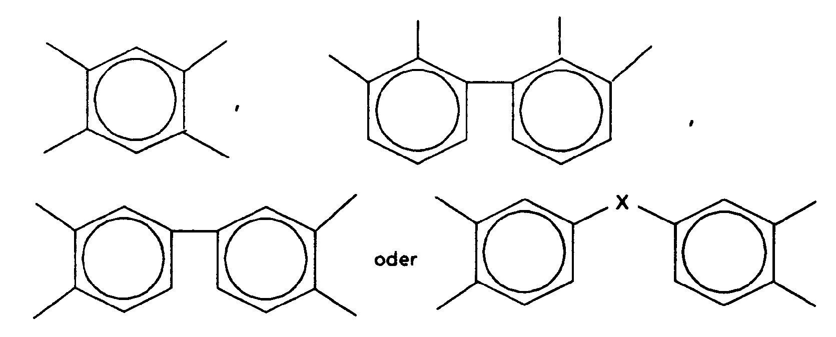
worin X für CO, CH₂, O, S, CF₂ steht und R für mindestens eine der folgenden zweibindigen aromatischen Gruppen, ausgewählt aus 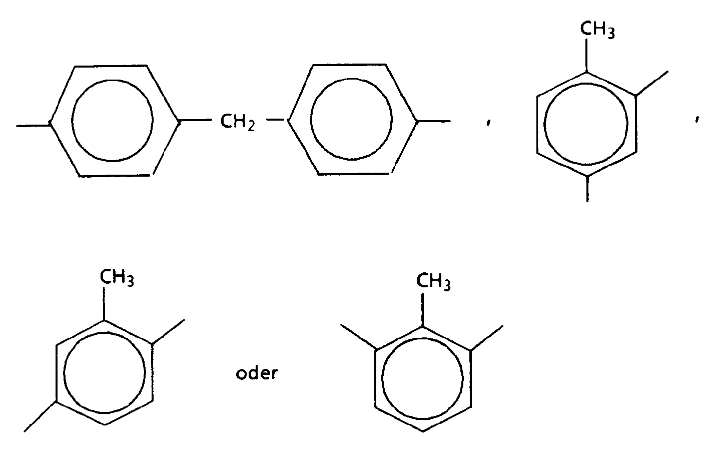
steht.

Das Molekulargewicht des erfindungsgemäß verwendeten Polyimides besitzt vorzugsweise ein Zahlenmittel von etwa 6.000 bis 60.000 und ein Gewichtsmittel von etwa 30.000 bis 300.000.

Das erfindungsgemäß verwendete Polyimid kann im pulverförmigen Gemisch in einer Menge zwischen 10 und 90 Gew.%, vorzugsweise zwischen 50 und 70 Gew.% vorliegen, wobei der Durchmesser der Polyimid-Teilchen zwischen 25 und 200 µm beträgt.

Als Metall kann Kupfer, Bronze, Stahl, Aluminiumlegierungen oder Nickellegierungen eingesetzt werden.

Eine vorteilhafte Ausführungsform des erfindungsgemäßen Verfahrens besteht darin, daß das pulverförmige Gemisch aus Polyimid und Metall mittels einer Plasmaflamme auf die zu beschichtende Oberfläche aufgebracht wird.

Die Herstellung des erfindungsgemäß verwendeten Polyimidpulvers kann nach bekannten Techniken erfolgen und ist beispielsweise in der AT-B-387.227 beschrieben. Zur Trocknung von feuchtem Polyimid-Pulver bzw. zur Einstellung des gewünschten Gehaltes an emittierbaren Bestandteilen kann beispielsweise eine mit Hochfrequenz betriebene Bandtrockneranlage oder ein im Vakuum betriebener Trommeltrockner eingesetzt werden. Die Trocknungstemperatur des Polymerpulvers liegt vorzugsweise unter 300°C.

Mit den nachfolgenden Beispielen wird die Erfindung noch näher beschrieben, wobei als Polyimid jeweils ein statistisches Copolymer aus 3,3',4,4'-Benzophenontetracarbonsäuredianhydrid und 0,8 Mol% 2,4-Toluylendiamin und 0,2 Mol% 4,4'-Diaminodiphenylmethan verwendet wurde. Das Polyimid wurde in einer Mahl-Sichtanlage zu einem Pulver mit Korngrößen zwischen 25 und 200 µm vermahlen.

### Beispiel 1:

Als Ausgangsmaterial diente ein Polyimidpulver, das nach dem in der AT-B-387.227 beschriebenen Verfahren hergestellt worden war. Die Einstellung des Gehaltes an emittierbaren Bestandteilen erfolgte in einer Bandtrockneranlage mit einer Leistung von 10 kW bei einer Elektrodenspannung von ca. 70 kV und einer Frequenz von 27 MHz. Das Pulver wurde im Bandtrockner getrocknet, wobei die Temperatur der Einlaufzone 50°C und die Temperatur beim Austritt 40°C betrug.

Nach einer Trocknungszeit von 45 min betrug der Gehalt an emittierbaren Bestandteilen 2,5 Gew.%. Dieser Wert wurde mit einem thermogravimetrischen Analysengerät der Firma Perkin Elmer ermittelt (Aufheizgeschwindigkeit 10°C/min; Temperaturbereich: 150 bis 350°C).

Das Polyimid-Pulver wurde anschließend im Verhältnis 60 : 40 mit einem SiAl-Pulver vermischt und mittels einer Plasmaspritzanlage der Firma Plasmatechnik AG (Schweiz) auf Stahl der Qualität ST50 aufgetragen, wobei folgende Parameter eingehalten wurden:
- Plasmagas:: Ar (84 L/min) und Wasserstoff
(2 l/min)
- Stromaufnahme:: 500 A bei 53 V
- Pulverfördermenge:: 50 bis 60 g/min
- Pulverfördergas:: 10 l Ar/min
- Brennerabstand zum Werstück:: 110 mm

Während des Plasmaspritzens wurde die Werkstückoberfläche mit Preßluft gekühlt.

Es konnte eine hochtemperaturbeständige Beschichtung ausgezeichneter Qualität mit einer Härte (HV) von 110 aufgetragen werden.

### Beispiel 2:

Ausgangsmaterial: wie in Beispiel 1, wobei der Gehalt an emittierbaren Bestandteilen aber in einem beheizbaren Vakuumtrockner (≦ 1 Torr) bei einer Temperatur von 250°C mit 1,8 Gew.% eingestellt wurde. Als Vakuumtrockner wurde ein Taumeltrockner verwendet (20 Upm). Die Trocknung wurde thermogravimetrisch verfolgt.

Das erhaltene Polyimid-Pulver wurde, wie in Beispiel 1 beschrieben, mit SiAl-Pulver plasmaverspritzt. Es konnte eine Beschichtung gleicher Qualität aufgetragen werden.

In einem Vergleichsversuch wurde der Gehalt an emittierbaren Bestandteilen auf 0,35 Gew.% eingestellt (Vakuum im Taumeltrockner: < 1 mbar; Temperatur: 270°C; Trocknungszeit: 300 min). Mit einem derartigen Polyimid-Pulver konnte beim Plasmaspritzen weder ein Verbund mit der zu beschichtenden Oberfläche noch zwischen den Teilchen hergestellt werden.

### Beispiel 3:

Als Ausgangsmaterial diente ein Polyimid, das nach dem in der DE-C-21 43 080 beschriebenen Verfahren hergestellt worden war. Der Gehalt an emittierbaren Bestandteilen wurde analog Beispiel 1 in einer Bandtrockneranlage mit 2,9 Gew.% eingestellt.

Das erhaltene Polyimid-Pulver wurde, wie in Beispiel 1 beschrieben, mit SiAl-Pulver zu einer Beschichtung gleicher Qualität plasmaverspritzt.

In einem Vergleichsversuch wurde der Gehalt an emittierbaren Bestandteilen in einem beheizbaren Vakuumtrockner (Vakuum: ≦ 1 mbar; Temperatur: 180°C; Trocknungszeit: 48h) auf weniger als 1 Gew.% eingestellt. Mit einem derartigen Polyimid-Pulver konnte beim Plasmaspritzen weder ein Verbund mit der zu beschichtenden Oberfläche noch zwischen den Teilchen hergestellt werden.

## Patentansprüche

1. Verfahren zum Beschichten von Oberflächen durch Flammspritzen eines pulverförmigen Gemisches aus einem hochtemperaturbeständigen Kunststoff und einem Metall, dadurch gekennzeichnet, daß als hochtemperaturbeständiger Kunststoff ein Polyimid mit einem Glasumwandlungspunkt von über 250°C, welches niedermolekulare, emittierbare Bestandteile in einer Menge von mindestens 1,0 Gew.%, vorzugsweise zwischen 1,0 und 10 Gew.%, enthält, eingesetzt wird.

2. Verfahren nach Anspruch 1, dadurch gekennzeichnet, daß das eingesetzte Polyimid Struktureinheiten der allgemeinen Formel 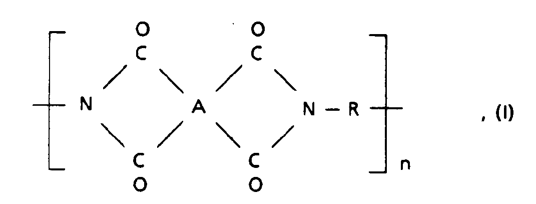 besitzt, worin n eine ganze Zahl größer als 1 bedeutet und A für eine vierbindige aromatische Gruppe ausgewählt aus 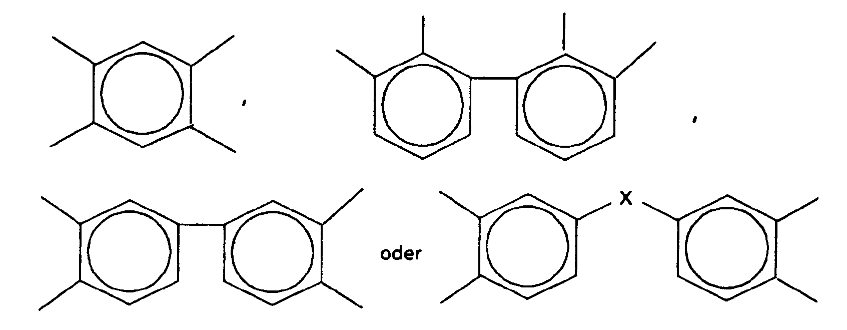 worin X für CO, CH₂, O, S, CF₂ steht und R für mindestens eine der folgenden zweibindigen aromatischen Gruppen, ausgewählt aus 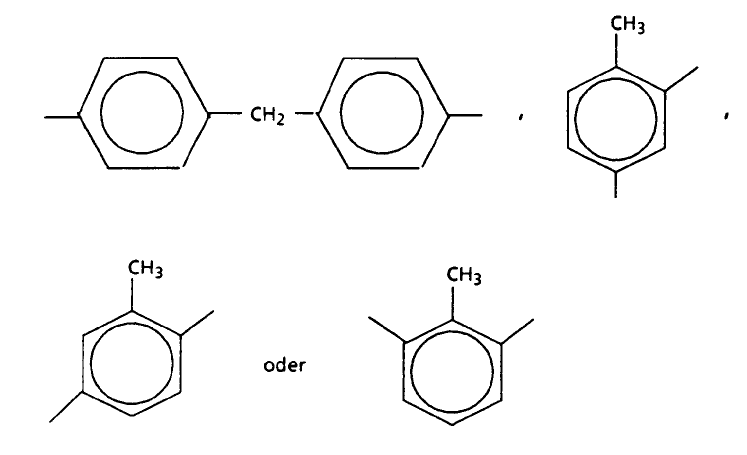 steht.

3. Verfahren nach einem der Ansprüche 1 oder 2, dadurch gekennzeichnet, daß das Polyimidpulver aus Teilchen mit einem Durchmesser zwischen 25 und 200 µm besteht.

4. Verfahren nach einem oder mehreren der Ansprüche 1 bis 3, dadurch gekennzeichnet, daß das pulverförmige Gemisch das Polyimid in einer Menge zwischen 10 und 90 Gew.%, vorzugsweise zwischen 50 und 70 Gew.%, enthält.

5. Verfahren nach Anspruch 1, dadurch gekennzeichnet, daß als Metall Kupfer, Bronze, Stahl, Aluminiumlegierungen oder Nickellegierungen eingesetzt werden.

6. Verfahren nach einem oder mehreren der Ansprüche 1 bis 5, dadurch gekennzeichnet, daß das pulverförmige Gemisch das Polyimid und Metall mittels einer Plasmaflamme auf die zu beschichtende Oberfläche aufgebracht wird.

## Claims

1. Process for coating surfaces by the flame-spraying of a powdered mixture of a high-temperature resistant plastic and a metal, characterised in that, a polyimide having a glass transition point of above 250 °C and containing volatile low molecular weight components in an amount of at least 1.0 wt%, preferably between 1.0 and 10 wt%, is used as the high-temperature resistant plastic.

2. Process in accordance with Claim 1, characterised in that, the polyimide used contains structural units of the general formula 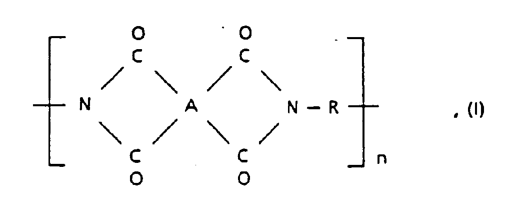 where n stands for an integer greater than 1 and A stands for an aromatic group having four bonds selected from 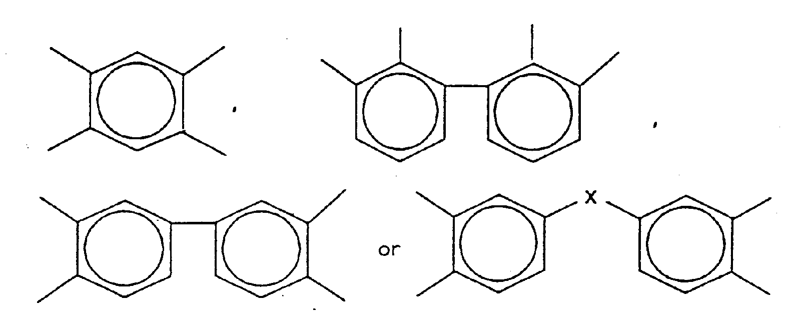 wherein X stands for CO, CH₂, O, S, CF₂ and R stands for at least one of the following aromatic groups having two bonds, selected from

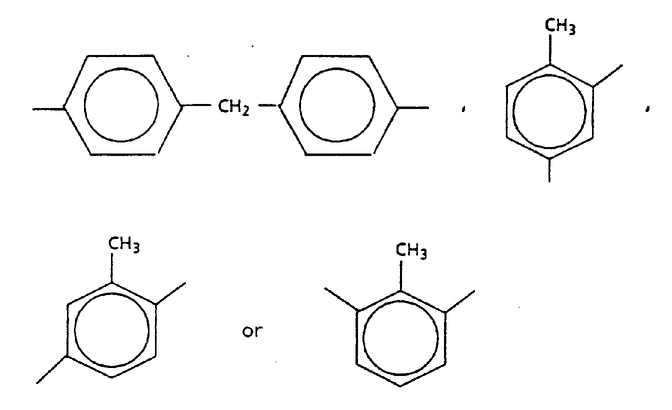

3. Process in accordance with one of the Claims 1 or 2, characterised in that, the polyimide powder consists of particles with a diameter between 25 and 200 µm.

4. Process in accordance with one or more of the Claims 1 to 3, characterised in that, the powdered mixture contains the polyimide in an amount between 10 and 90 wt%, preferably in an amount between 50 and 70 wt%.

5. Process in accordance with Claim 1, characterised in that, copper, bronze, steel, aluminium alloys or nickel alloys are used as the metal.

6. Process in accordance with one or more of the Claims 1 to 5, characterised in that, the powdered mixture of polyimide and metal are applied to the surface to be coated by means of a plasma flame.

## Revendications

1. Procédé d'enduction de surface par projection à la flamme d'un mélange pulvérulent d'une matière plastique résistante à température élevée et d'un métal, caractérisé en ce qu'un polyimide, avec un point de transition vitreuse supérieur à 250°C est mis au point en tant que matière plastique résistante à température élevée, lequel contient un composant susceptible de se dégager de poids moléculaire faible, en une quantité d'au moins 1,0% en poids, de préférence dans l'intervalle de 1,0 à 10% en poids.

2. Procédé suivant la revendication 1, caractérisé en ce que le polyimide utilisé se compose d'unités structurales de formule générale : 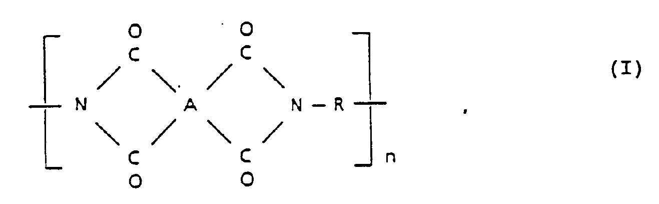 où n est un nombre entier plus grand que 1 et A est un radical aromatique tétravalent choisi parmi : 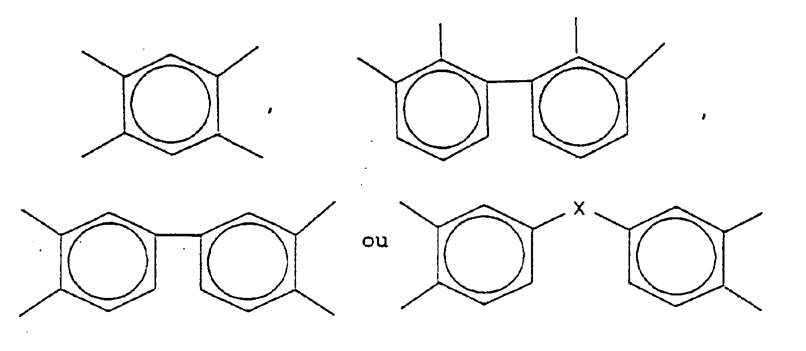 où X est CO, CH₂, O, S, CF₂ et R est au moins un des radicaux aromatiques divalents suivants choisis parmi :

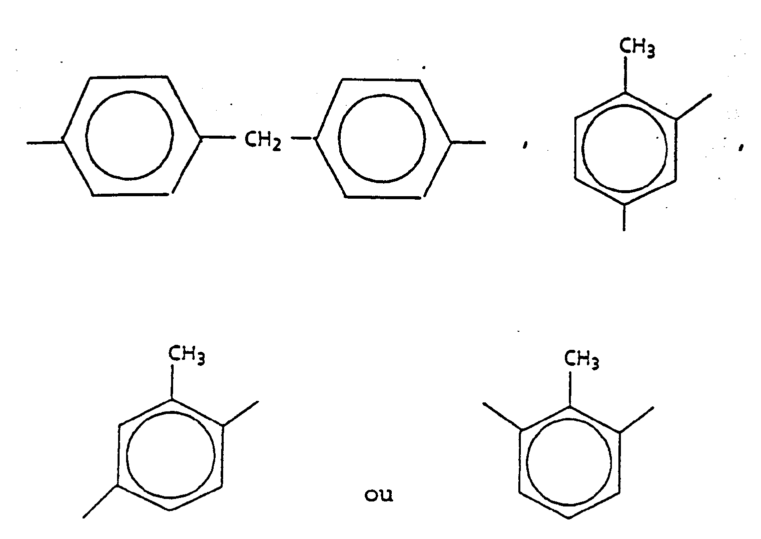

3. Procédé suivant l'une quelconque des revendications 1 ou 2, caractérisé en ce que la poudre de polyimide se compose de particules d'un diamètre compris entre 25 et 200 µm.

4. Procédé suivant l'une quelconque ou plusieurs des revendications 1 à 3, caractérisé en ce que le mélange pulvérulent se compose de polyimide en une quantité de 10 à 90% en poids, de préférence entre 50 et 70% en poids.

5. Procédé suivant la revendication 1, caractérisé en ce que le métal utilisé est du cuivre, du bronze, de l'acier, des alliages d'aluminium ou des alliages de nickel.

6. Procédé suivant l'une quelconque ou plusieurs des revendications 1 à 5, caractérisé en ce que le mélange pulvérulent de polyimide et de métal est porté sur la surface à enduire au moyen d'un plasma à la flamme.
